**Europäisches Patentamt**

**European Patent Office**

**Office européen des brevets**

(11) Veröffentlichungsnummer: **0 045 945**
**B1**

(12) **EUROPÄISCHE PATENTSCHRIFT**

(45) Veröffentlichungstag der Patentschrift:
**11.07.84**

(51) Int. Cl.³: **A 21 C 13/00**

(21) Anmeldenummer: **81106159.7**

(22) Anmeldetag: **06.08.81**

(54) **In Gärunterbrechern verwendbarer Lagerboden.**

(30) Priorität: **07.08.80 DE 3029919**

(43) Veröffentlichungstag der Anmeldung:
**17.02.82 Patentblatt 82/7**

(45) Bekanntmachung des Hinweises auf die Patenterteilung:
**11.07.84 Patentblatt 84/28**

(84) Benannte Vertragsstaaten:
**AT BE CH FR GB IT LI LU NL SE**

(56) Entgegenhaltungen:
**DE - A - 1 931 639**
**DE - A - 2 912 416**
**DE - C - 926 362**
**DE - U - 7 907 456**

(73) Patentinhaber: **Lohner, Gerd, Schulstrasse 9,**
**D-5480 Remagen 3 (DE)**

(72) Erfinder: **Lohner, Gerd, Schulstrasse 9,**
**D-5480 Remagen 3 (DE)**

(74) Vertreter: **Grommes, Karl F., Dr., Casinostrasse 37,**
**D-5400 Koblenz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

### Technisches Gebiet

Die Erfindung betrifft einen in Gärunterbrechern verwendbaren Lagerboden für Teigrohlinge zur Herstellung von Brötchen od. dgl. mit einem Ausbund.

Brötchen mit einem Ausbund, das sind Schnittbrötchen, werden — wenn sie sogleich abgebacken werden können — wie folgt hergestellt. In einer Teigmaschine wird zunächst der Backteig hergestellt. Dieser wird auf eine Brötchenalnage aufgegeben, welche Teigrohlinge (Teigformlinge) liefert. Es handelt sich dabei um Teigabschnitte, welche mit ihren Enden zur Mitte hin eingerollt oder eingeschlagen sind.

Mit dieser eine Berührungsnaht aufweisenden Seite, dem sogenannten Schluss, werden die Teigrohlinge auf Holzkippdielen, Holzkippkästen oder ähnlichen Lagerböden abgesetzt. Die Lagerböden werden anschliessend mit Lochblechen — den späteren Backblechen — abgedeckt, in einen Gärschrank gefahren und dort etwa 20 bis 30 min aufbewahrt. Danach werden sie gekippt, wobei sie die Teigrohlinge an die Backbleche abgeben. Auf den Backblechen gelangen die Teigrohlinge schliesslich in einen Backofen, wo sie für etwa 18 bis 20 min einer Ofentemperatur von meist 230 bis 250° C ausgesetzt bleiben.

Mit dem Überwechseln auf die Backbleche gelangt der Schluss der Teigrohlinge nach oben. Während des Backprozesses springt dann die Berührungsnaht auf bzw. reisst auf, es entsteht der sogenannte Ausbund, welcher für Schnittbrötchen od. dgl., z.B. auch Kaisersemmel, erwünscht ist.

Mit der Einführung eines Backverbotes für die Nacht ist es praktisch nicht mehr möglich, Brötchen in der angegebenen Weise herzustellen. Das Backverbot beinhaltet nämlich, dass Vorbereitungen zum Backen erst ab 3.30 Uhr morgens getroffen werden dürfen und mit dem eigentlichen Abbacken erst ab 4.00 Uhr begonnen werden kann. Nun würden die geschilderten Vorbereitungen bis zum eigentlichen Abbacken bereits 1 h in Anspruch nehmen, so dass das erste Abbacken noch nicht einmal zum frühestmöglichen Zeitpunkt erfolgen könnte. Im übrigen kommt es darauf an, die Brötchen möglichst frühzeitig zur Auslieferung und Verteilung bereit zu haben, so dass für das Abbacken letztlich nur eine recht kurze Zeitspanne (maximal 1 bis 2 h) zur Verfügung steht. In dieser Zeitspanne lässt sich keine grössere Menge Backwaren in der geschilderten Weise herstellen. Das ist nur möglich, wenn die Zeit ausschliesslich zum Abbacken genutzt wird und dafür jeweils ofenfertige Teigrohlinge bereitstehen.

Dies lässt sich heutzutage nur noch mit Gärunterbrechern erreichen. Sie treten an die Stelle der vorerwähnten Gärschränke. In den Gärunterbrechern werden die Teigrohlinge zunächst auf −5 bis −7° C abgekühlt und können dann in diesem Zustand bis zu 50 h und mehr gehalten werden. Vor der Entnahme der Teigrohlinge zum Abbacken erfolgt eine Aufheizung auf ca. 30° C, begleitet von einer relativen Luftfeuchte von bis zu 90%.

### Stand der Technik

Mit dem Einsatz solcher Gärunterbrecher (im Interesse eines hohen Ausstosses an Backwaren) tritt jedoch folgendes Problem auf. Die Teigrohlinge können darin nicht mehr auf den bekannten Lagerböden, nämlich Holzkippdielen, Holzkippkästen o.ä. gelagert werden. Es hat sich nämlich gezeigt, dass der untere, aufliegende Teil der Teigrohlinge nicht genügend treibt. Hier lässt sich wohl Abhilfe schaffen, indem die Teigrohlinge bereits vor Eintritt in den Gärunterbrecher auf die späteren Backbleche umgekippt werden. Nun kann die zum Treiben benötigte Luft an fast die gesamte Oberfläche herantreten, jedoch gelangt mit dieser auch die Luftfeuchte an fast die gesamte Oberfläche. Die Teigrohlinge werden dadurch konsistenter und verlieren ihre Neigung zum Aufspringen oder Aufreissen. Im Ergebnis lassen sich also bei Einsatz von Gärunterbrechern keine Backwaren mehr mit einem Ausbund herstellen.

### Darstellung der Erfindung

Hier setzt nun die Erfindung an. Ihr liegt die Aufgabe zugrunde, einen in Gärunterbrechern verwendbaren Lagerboden anzugeben, mit dem sich wieder Brötchen od. dgl. mit einem Ausbund herstellen lassen.

Dieses schon seit langem bekannte, praktisch tagtäglich millionenfach auftretende Problem kann nach dem Vorschlag der Erfindung auf überraschend einfache Weise dadurch gelöst werden, dass der Lagerboden ein Stützgeripppe mit Vertiefungen zur Aufnahme der Teigrohlinge sowie eine Textilabdeckung besitzt und dass zwischen Stützgeripppe und Textilabdeckung eine Schaumstoffauflage vorgesehen ist, wobei die Schaumstoffauflage zusammen mit der Textilabdeckung auf der ganzen Oberfläche des Stützgeripppes aufliegt.

Ein Lagerboden, welcher ein Stützgeripppe mit Vertiefungen zur Aufnahme der Teigrohlinge sowie eine Textilabdeckung besitzt, ist an sich bereits durch das DE-U Nr. 7907456 bekannt, allerdings in einem ganz anderen Zusammenhang. So sollen mit ihm Schwitzflecken auf dem fertigen Backgut vermieden werden. Zur Herstellung von Brötchen mit einem Ausbund ist er dagegen nicht vorgesehen und auch nicht geeignet. Auf ihm würden die Teigrohlinge unter Einwirkung der Luftfeuchte — ähnlich wie zuvor für die gelochten Backbleche beschrieben — ihre Neigung zum Aufspringen oder Aufreissen verlieren.

Der Erfindung liegt die Erkenntnis zugrunde, dass zwar einerseits der Zutritt von Feuchtigkeit im Bereich des späteren Ausbundes erschwert sein muss, jedoch kein hermetischer Luftabschluss erfolgen darf. Mit dieser Zielsetzung schlägt die Erfindung zunächst das Stützgeripppe vor, welches der Formgebung dient und in hohem Masse luftdurchlässig ist. Es kommen dafür in erster Linie metallische, darüberhinaus aber auch nichtmetallische Werkstoffe in Betracht. Es muss lediglich ein Mindestmass an Formbeständigkeit gewährleistet sein, ferner Geruchs- und Geschmacksneutralität. Eine besondere Hitzebeständigkeit braucht der zu verwendende Werkstoff nicht zu besitzen, da er praktisch nur bei erhöhter Raumtemperatur eingesetzt wird. Unter den Metallen sind beispielsweise Edelmetall und Aluminium sehr geeignet. Das Stützgerippe kann von vielfältiger Gestalt sein, beispielsweise aus einem Gewebe, einer Lochplatte o.ä. bestehen oder aber aus einzelnen Drähten, Stäben od. dgl. gebildet sein.

Die kritischen Verhältnisse an der zu beeinflussenden Oberfläche werden im übrigen mit Hilfe der Schaumstoffauflage samt Textilabdeckung geschaffen. Als Schaumstoffauflage kommt handelsüblicher Schaumstoff von wenigen Millimetern, z.B. 3 mm, Stärke in Betracht, wie er beispielsweise zum Füttern von Kleidung und Möbeln sowie zum Dekorieren verwandt wird. Er besitzt eine ausreichende Porosität und wirkt offenbar feuchtigkeitsregulierend. Die Textilabdeckung kann ein Gewebe, insbesondere Baumwollgewebe, ein Vlies, Filztuch o.ä. von einigen Zehnteln Millimetern Stärke sein. Sie schafft eine hygienische, reinigungsfähige (waschbare) Kontaktfläche. Schaumstoffauflage und Textilabdeckung können über Bänder, Schlaufen o.ä. lösbar mit dem Stützgerippe verbunden sein, ebenso gut aber auch fest damit verbunden, beispielsweise verklebt oder daran angeheftet, angenäht oder in ähnlicher Weise fixiert sein.

Schliesslich weist der Lagerboden Vertiefungen auf, wodurch es zu einer teilweisen Umschliessung des Teigrohlings kommt und die mit dem vorgeschlagenen Aufbau erzielbaren Einflüsse voll entwickelt werden. Die Vertiefungen können beispielsweise derart sein, dass darin jeweils nur ein Teigrohling Aufnahme findet oder aber mehrere, insbesondere in einer Reihe. Im letzteren Falle besitzen die Vertiefungen die Form einer Rinne.

Ein erfindungsgemässer Lagerboden ersetzt damit die bekannten Holz-Kippdielen o.ä. Er erweist sich als ideales „Garblech" zur Verwendung in Gärunterbrechern. Ausserdem kann er aber auch in Gärschränken verwendet werden. Nach dem Verlassen des Gärunterbrechers müssen die Teigrohlinge auf die Backbleche umgesetzt werden, was wie bei den bisherigen Lagerböden durch Umkippen geschehen kann. Bei einem erfindungsgemässen Lagerboden kann also wie zuvor eine gegenseitige Abstimmung mit den Backblechen, d.h. eine Ausbildung zum Kippkasten erfolgen.

Vorteilhaft besteht das Stützgerippe aus einem Streckmetall. Dieses ist sowohl formstabil als auch in hohem Masse luftdurchlässig. Geeignet ist bereits handelsübliches Streckmetall, z.B. in einer Materialstärke von etwa 1 mm, mit Stegbreiten von etwa 1,5 mm und Maschenweiten von etwa 6×16 mm.

Zweckmässigerweise ist die Schaumstoffauflage einstückig mit der Textilabdeckung ausgebildet. Es kann sich dabei um eine Ausführungsform handeln, wie sie ansonsten beispielsweise als Tischschoner unter Tischdecken verwandt wird.

Nach einem weiteren Vorschlag weisen die Schaumstoffauflage und die Textilabdeckung etwa folgende Materialzusammensetzung auf: 14 Gew.-% Viskose, 30 Gew.-% Polyurethan und 56 Gew.-% Baumwolle.

Vorteilhaft ist der Lagerboden als Kippkasten ausgebildet.

### Kurze Beschreibung der Zeichnung

Die Erfindung wird nachstehend anhand der Zeichnung für ein bevorzugtes Ausführungsbeispiel beschrieben. Darin zeigen:

Figur 1 einen als Kippkasten ausgebildeten Lagerboden in perspektivischer Ansicht,

Figur 2 einen Eckbereich des Gegenstandes nach Figur 1 im Schnitt entlang der Linie II-II, und

Figur 3 den Gegenstand nach Figur 2 in Draufsicht ohne Textilabdeckung und Schaumstoffauflage.

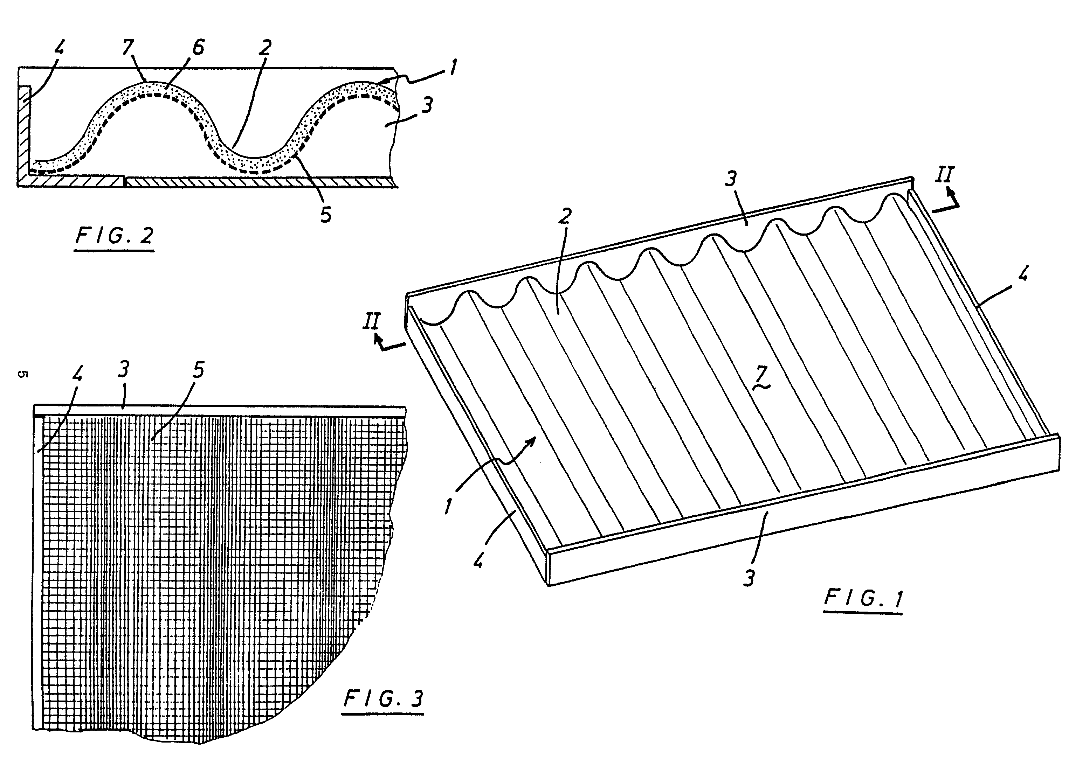

Nach Figur 1 weist ein wellenförmig gebogener Lagerboden 1 rinnenartige Vertiefungen 2 zur Aufnahme (von hier nicht näher dargestellten) Teigrohlingen auf.

Die Vertiefungen 2 verlaufen in parallelem Abstand zueinander. Der Lagerboden 1 ist rundum von Winkelleisten 3, 4 eingefasst und überragt. Die beiden sich gegenüberliegenden Winkelleisten 3 sind dabei etwas höher als ihre benachbarten Winkelleisten 4. Sie erlauben es, ein Backblech zur Abdeckung des Lagerbodens 1 zu halten, auf das später die Teigrohlinge des Lagerbodens 1 abgegeben werden können. Der Lagerboden 1 ist insoweit hier als Kippkasten ausgebildet.

Wie insbesondere aus Figur 2 hervorgeht, baut sich der erfindungsgemässe Lagerboden 1 aus einem Stützgerippe 5, einer Schaumstoffauflage 6 und einer Textilabdeckung 7 auf. Das Stützgerippe 5 ist hier ein Drahtgewebe (vgl. auch Figur 3), welches sich mit seinen Rändern auf den horizontalen Schenkeln der Winkelleisten 3, 4 abstützt. Die Schaumstoffauflage 6 und die Textilabdeckung 7 sind einstückig ausgebildet und mit dem Stützgerippe 5 fest verbunden.

### Patentansprüche

1. In Gärunterbrechern verwendbarer Lagerboden (1) für Teigrohlinge zur Herstellung von Brötchen od. dgl. mit einem Ausbund, dadurch gekennzeichnet, dass der Lagerboden (1) ein Stützgerippe (5) mit Vertiefungen (2) zur Aufnahme der Teigrohlinge sowie eine Textilabdeckung (7) besitzt und dass zwischen Stützgerippe (5) und Textilabdeckung (7) eine Schaumstoffauflage (6) vorgesehen ist, wobei die Schaumstoffauflage (6) zusammen mit der Textilabdeckung (7) auf der ganzen Oberfläche des Stützgerippes (5) aufliegt.

2. Lagerboden nach Anspruch 1, dadurch gekennzeichnet, dass das Stützgerippe (5) aus einem Streckmetall besteht.

3. Lagerboden nach Anspruch 1, dadurch gekennzeichnet, dass die Schaumstoffauflage (6) einstückig mit der Textilabdeckung (7) ausgebildet ist.

4. Lagerboden nach Anspruch 3, dadurch gekennzeichnet, dass die Schaumstoffauflage (6) und die Textilabdeckung (7) etwa folgende Materialzusammensetzung aufweisen: 14 Gew.-% Viskose, 30 Gew.-% Polyurethan und 56 Gew.-% Baumwolle.

5. Lagerboden nach Anspruch 1, dadurch gekennzeichnet, dass er als Kippkasten ausgebildet ist.

## Claims

1. A support tray (1) for use in fermentation interruptors for dough mouldings for the production of bread rolls or the like, incorporating a pattern, characterised in that the support tray (1) has a supporting grid (5) including depressions (2) for reception of the uncooked dough mouldings, as well as a textile covering (7), and that a facing (6) of expanded material is provided between the supporting grid (5) and the textile covering (7).

2. A support according to Claim 1, characterised in that the supporting grid (5) consists of an expanded metal.

3. A support tray according to Claim 1, characterised in that the expanded material facing (6) is integrally formed with the textile covering (7), the expanded material facing (6) extending together with the textile covering (7) throughout the surface of the supporting grid (5).

4. A support tray according to Claim 3, characterised in that the expanded material facing (6) and the textile covering (7) have approximately the following material composition: 14% by weight of viscose, 30% by weight of polyurethane, and 56% by weight of cotton.

5. A support tray according to Claim 1, characterised in that it is constructed as a tipping box.

## Revendications

1. Support (1) utilisable dans les chambres de conservation de pâte à pain pour les pâtons destinés à la fabrication de petits pains ou produits similaires présentant une grigne, caractérisé par le fait que le support (1) présente une carcasse de soutien (5) comportant des creux (2) pour loger les pâtons, ainsi qu'un revêtement de textile (7), et qu'entre la carcasse de soutien (5) et le revêtement de textile (7) est prévue une couche de matière alvéolaire (6).

2. Support selon la revendication 1, caractérisé par le fait que la carcasse de soutien (5) est formée d'un métal déployé.

3. Support selon la revendication 1, caractérisé par le fait que la couche de matière alvéolaire (6) fait corps avec le revêtement de textile (7), la couche de matière alvéolaire (6) reposant avec le revêtement de textile (7) sur toute la surface de la carcasse de soutien (5).

4. Support selon la revendication 3, caractérisé par le fait que la couche de matière alvéolaire (6) et le revêtement de textile (7) présentent à peu près la composition de matière suivante: 14% en poids de viscose, 30% en poids de polyuréthanne et 56% en poids de coton.

5. Support selon la revendication 1, caractérisé par le fait qu'il est conçu sous forme de caisson retournable.

FIG.2

FIG.3

FIG.1

0 045 945